# EUROPEAN PATENT SPECIFICATION

(11) **EP 4 210 156 B1**
(45) Date of publication and mention of the grant of the patent: **28.10.2026**
(21) Application number: 23150258.4
(22) Date of filing: 04.01.2023
(51) Int. Cl.: H01M 50/103, H01M 50/15, H01M 50/176, H01M 50/531, H01M 50/533, H01M 50/536, H01M 50/55, H01M 50/553, H01M 50/566, H01M 50/567, H01M 50/528

(54) **SECONDARY BATTERY**
SEKUNDÄRBATTERIE
BATTERIE SECONDAIRE

(30) Priority: 05.01.2022 KR 20220001466
(43) Date of publication of application: 12.07.2023
(73) Proprietor: Samsung SDI Co., Ltd., Yongin-si, Gyeonggi-do 17084 (KR)
(72) Inventor: Lee, Hyun Soo, 17084 Yongin-si, Gyeonggi-do (KR)
(74) Representative: Gulde & Partner

(56) References cited:
- KR-A- 20190 102 817
- US-A1- 2015 280 204
- US-B2- 8 501 346

## Description

### BACKGROUND

### 1. Field

Aspects of embodiments of the present disclosure relate to a secondary battery.

### 2. Description of the Related Art

Different from primary batteries, which are not designed to be rechargeable, secondary batteries are designed to be charged and discharged. Low-capacity secondary batteries are widely employed in small sized portable electronic devices, such as mobile phones, camcorders, etc., and large-capacity secondary batteries are typically used for driving motors of hybrid automobiles, electric automobiles, etc.

Such secondary batteries are manufactured in various shapes, and typical shapes include a cylindrical shape and a prismatic shape. The secondary battery is configured by installing an electrode assembly formed by interposing a separator, which is an insulator, between positive and negative electrode plates in a case with an electrolyte and installing a cap plate on the case. The electrode assembly is electrically connected to an electrode terminal through a current collector plate. The usable internal volume of the case (e.g., the internal volume of the case available to accommodate active material) changes according to the structure of the current collector plate. Examples may be found in KR 20190102817 A.

### SUMMARY

The invention is defined by the appended claims. The description that follows is subjected to this limitation. Any disclosure lying outside the scope of said claims is only intended for illustrative as well as comparative purposes. Embodiments of the present disclosure provide a secondary battery exhibiting improved welding quality while maintaining the rigidity and heat tolerating performance of a current collector plate.

A secondary battery, according to an embodiment of the present disclosure, includes: a case having an accommodating space therein; an electrode assembly accommodated in the case and having an uncoated portion on one end thereof; a current collector plate electrically connected to the uncoated portion of the electrode assembly; a cap plate sealing the case; and an electrode terminal (extending) outside the cap plate and electrically connected to the current collector plate. The current collector plate has a terminal hole through which the electrode terminal passes and the current collector plate includes a coupling protrusion protruding from the current collector plate toward the electrode assembly along a periphery of the terminal hole.

The electrode terminal is electrically connected to the current collector plate via the coupling protrusion. That is, the electrode terminal is electrically connected to the coupling protrusion in order to electrically connect the current collector plate.

In an embodiment of the secondary battery, a rivet groove may be formed inside the coupling protrusion. Also, a lower portion of the electrode terminal may be riveted to (i.e. deformed into) the rivet groove. In other words, a lower portion of the electrode terminal may be at least partially directly coupled with the coupling protrusion inside the rivet groove. That is, a lower portion of the electrode terminal may at least partially protrude into the rivet groove in order to be (electrically) coupled and interlocked with the coupling protrusion.

The electrode terminal may be (directly) coupled to the coupling protrusion through welding. The electrode terminal is welded to the coupling protrusion.

A welding beam, used for the welding, may be irradiated upwardly from a lower surface of the coupling protrusion.

A center of the welding beam may be positioned inside the coupling protrusion.

In an embodiment, the current collector plate may comprise a terminal connection portion and an electrode connection portion. Said terminal connection portion may comprise a plate portion extending in a direction parallel to the electrode assembly. The coupling protrusion may be formed on a lower surface of the plate portion. The coupling protrusion may protrude from the plate portion toward the electrode assembly along a periphery of the terminal hole.

The current collector plate may have a plate portion extending in a direction parallel to the electrode assembly, and the coupling protrusion may be on a lower surface of the plate portion.

A height (h) at which the coupling protrusion protrudes from the lower surface of the plate portion may be in a range of about 0.2*t1 ≤ h ≤ t1, and t1 may be the thickness of the plate portion.

The width (t2) of the coupling protrusion along the lower surface of the plate portion may be in a range of about 0.2*t1 ≤ t2 ≤ t1, and t1 may be the thickness of the plate portion.

The rivet groove in the coupling protrusion may have a width in a range of about 0.1 mm to about 0.2 mm in a direction parallel to a longitudinal direction of the electrode assembly.

The rivet groove in the coupling protrusion may have a height in a range of about 0.2 mm to about 0.4 mm in a direction perpendicular to the longitudinal direction of the electrode assembly.

A second aspect of the disclosure refers to a method of manufacturing the secondary battery as described above.

The method comprises providing a case having an accommodating space therein, with an electrode assembly accommodated in the case and having an uncoated portion on one end thereof, with a current collector plate electrically connected to the uncoated portion of the electrode assembly, with a cap plate sealing the case, and with an electrode terminal (extending) outside the cap plate, wherein the current collector plate has a terminal hole through which the electrode terminal passes and the current collector plate includes a coupling protrusion protruding from the current collector plate toward the electrode assembly along a periphery of the terminal hole. The method further comprises electrically connecting the electrode terminal with the current collector plate.

The electrode terminal is electrically connected with the coupling protrusion in order to electrically connecting the electrode terminal with the current collector plate.

In the method, the electrically connecting of the electrode terminal with the current collector plate is performed by welding. The electrically connecting of the electrode terminal with the current collector plate is performed by welding the electrode terminal to the coupling protrusion. Preferably, the welding may be performed upwardly from a lower surface of the coupling protrusion.

The method may further comprise before the welding, positioning a center of a welding beam inside the coupling protrusion.

The method may further comprise, before the welding, deforming a lower riveting portion of the electrode terminal, as to couple an end portion of the lower riveting portion with the coupling protrusion inside the rivet groove. The deforming may be performed in a riveting-process, wherein the electrode terminal corresponds to a rivet.

### BRIEF DESCRIPTION OF DRAWINGS

FIG. 1 is a perspective view of a secondary battery according to an embodiment of the present disclosure.
FIG. 2 is a cross-sectional view taken along the line A-A of FIG. 1.
FIG. 3 is an enlarged view of the portion B of FIG. 2.
FIG. 4 illustrates a terminal coupling portion of a current collector plate according to an embodiment of the present disclosure.

### DETAILED DESCRIPTION

Hereinafter, embodiments of the present disclosure will be described, in detail, with reference to the accompanying drawings.

Embodiments of the present disclosure are provided herein to more completely explain the present disclosure, but the present disclosure may be embodied in many different forms and should not be construed as being limited to the embodiments set forth herein. Rather, these example embodiments are provided so that this disclosure will be thorough and complete and will convey the aspects and features of the present disclosure to a person skilled in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of," when preceding a list of elements, modify the entire list of elements and do not modify the individual elements of the list. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

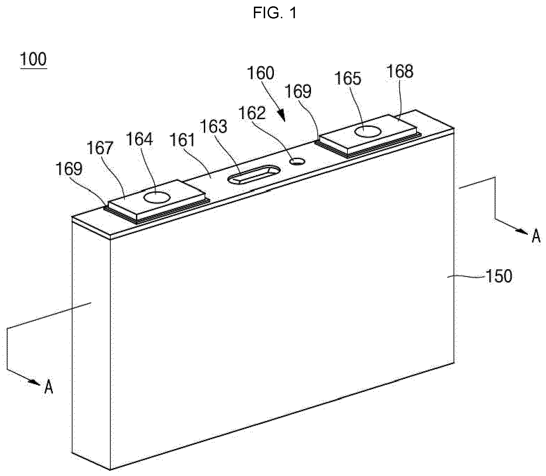

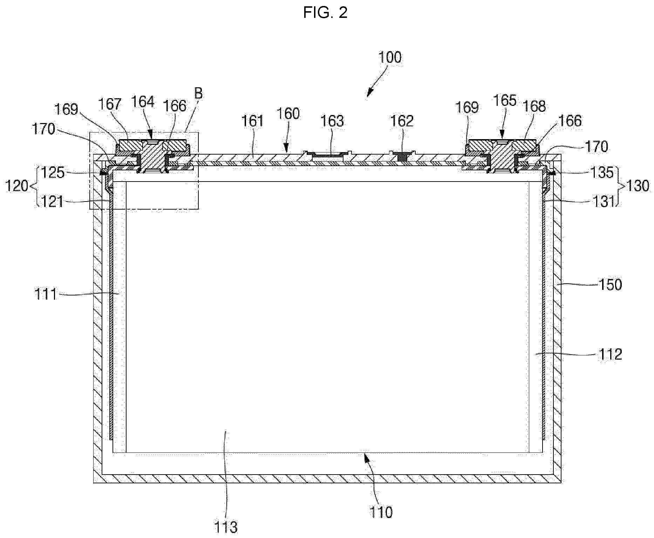

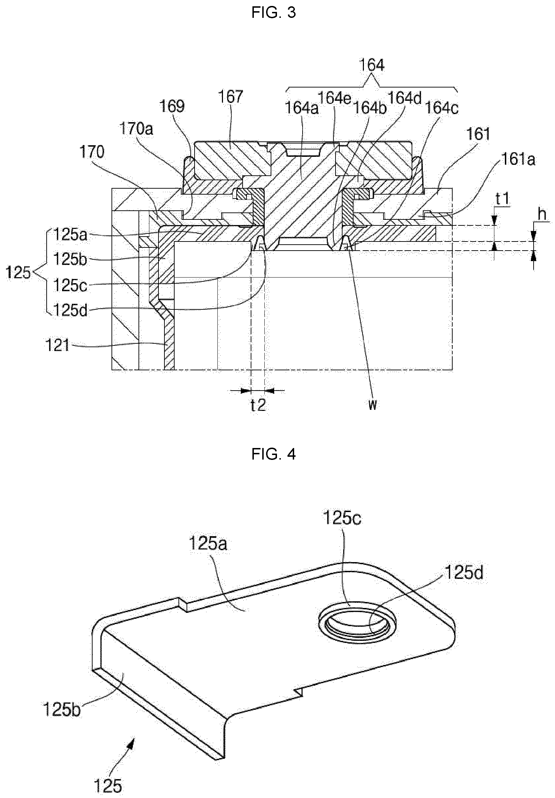

FIG. 1 is a perspective view of a secondary battery according to an embodiment of the present disclosure. FIG. 2 is a cross-sectional view taken along the line A-A of FIG. 1. FIG. 3 is an enlarged view of the portion B of FIG. 2. FIG. 4 illustrates a terminal coupling portion of a current collector plate according to an embodiment of the present disclosure.

Referring to FIGS. 1 to 4, a secondary battery 100, according to an embodiment of the present disclosure, includes an electrode assembly 110, current collector plates 120 and 130, a case 150, and a cap assembly 160.

The electrode assembly 110 is formed by stacking a plurality of layers of a first electrode plate, a separator, and a second electrode plate, each of which is formed in a thin plate shape or a film shape. In one embodiment, the first electrode plate may be a first-polarity electrode, for example, a positive electrode, and the second electrode plate may be a second-polarity electrode, for example, a negative electrode. However, in other embodiments, the first electrode plate and the second electrode plate may have any polarity as long as the polarities are different from each other.

The first electrode plate is formed by coating a first electrode active material, such as a transition metal oxide, on a first electrode current collector formed of a metal foil, such as aluminum, and includes a first electrode uncoated portion 111, that is, a region to which the first active material is not applied. The first electrode uncoated portion 111 provides a passage for current flow between the first electrode plate and the outside.

The first electrode uncoated portions 111 of the various first electrode plates are arranged and/or formed to overlap (e.g., to be aligned) at the same position when first electrode plates are stacked to form a multi-tap structure. The first electrode uncoated portion 111 is formed to protrude toward (or from) one side of the electrode assembly 110, and in some embodiments, a plurality of first uncoated portions 111 may be welded to each other to form one first current collecting tab. The first electrode uncoated portion 111 is aligned at the one side of the electrode assembly 110 and protrudes therefrom.

The second electrode plate is formed by coating a second electrode active material, such as graphite or carbon, on a first electrode current collector formed of a metal foil, such as copper or nickel, and includes a second electrode uncoated portion 112, that is, a region to which the second active material is not applied.

The second electrode uncoated portions 112 of the various first electrode plates are arranged and/or formed to overlap (e.g., to be aligned) at the same position when second electrode plates are stacked to form a multi-tap structure. The second electrode uncoated portion 112 is formed to protrude toward (or from) the other side of the electrode assembly 110, and in some embodiments, a plurality of second uncoated portions 112 may be welded to each other to form one second current collecting tab.

The separator is positioned between the first electrode plate and the second electrode plate to prevent a short circuit while enabling movement of lithium ions. The separator may be made of polyethylene, polypropylene, or a composite film of polyethylene and polypropylene. However, the scope of the present disclosure is not limited by a material of the separator.

After the plurality of electrode plates are stacked, the electrode assembly 110 may maintain a stacked state while a separate insulating tape 113 is attached to a partial region of the electrode assembly 110. The insulating tape 113 helps maintain the shape of the electrode assembly 110. Thus, the electrode assembly 110 can be welded to the current collector plates 120 and 130 at a correct position, and the structure of the electrode assembly 110 can be maintained in a final secondary battery structure.

The electrode assembly 110 is substantially accommodated in the case 150 together with an electrolyte. The electrolyte may be formed of a lithium salt, such as LiPF₆ or LiBF₄, in an organic solvent, such as ethylene carbonate (EC), propylene carbonate (PC), diethyl carbonate (DEC), ethyl methyl carbonate (EMC), or dimethyl carbonate (DMC). In addition, the electrolyte may be in the form of a liquid, a solid, or a gel.

The current collector plates 120 and 130 include a first current collector plate 120 electrically connected to the first electrode uncoated portion 111 and a second current collector plate 130 electrically connected to the second electrode uncoated portion 112.

The first current collector plate 120 is formed of a conductive material, such as aluminum, and is coupled to the first electrode uncoated portion 111 protruding to (or from) one end of the electrode assembly 110 to be electrically connected to the first electrode plate.

The first current collector plate 120 may include an electrode connection portion 121 and a terminal connection portion 125. In some embodiments, the electrode connection portion 121 and the terminal connection portion 125 may be directly coupled through welding. In other words, the electrode connection portion 121 may be directly welded to the terminal connection portion 125.

The electrode connection portion 121 may be formed in (e.g., may primarily extend in) the vertical direction along one side surface of the electrode assembly 110. The electrode connection portion 121 may be coupled, through welding, in a state of being in contact with the first electrode uncoated portion 111 of the electrode assembly 110 and may have the same first polarity as the first electrode uncoated portion 111.

The terminal connection portion 125 is positioned on the electrode assembly 110 and is formed in (e.g., extends primarily in) parallel with a cap plate 161, to be described later. For example, the terminal connection portion 125 is positioned between the electrode assembly 110 and the cap plate 161 and has a substantially flat plate shape. The terminal connection portion 125 may be (directly) coupled to the electrode connection portion 121 through welding.

Referring to FIGS. 3 and 4, the terminal connection portion 125 may include a rectangular plate portion 125a formed in parallel with the cap plate, a bent portion 125b provided at one end (or one edge) of the plate portion 125a, and a coupling protrusion 125c downwardly formed on the inner side (e.g., a side facing toward the electrode assembly 110) of the plate portion 125a.

The plate portion 125a may be formed substantially parallel to the cap plate 161 and the electrode assembly 110. The plate portion 125a may be spaced apart from the electrode assembly 110 and may be separated from the cap plate 161 by an insulating member 170, to be described later. Accordingly, the plate portion 125a may be electrically independent of (e.g., electrically isolated from) the cap plate.

The bent portion 125b may be provided at one end of the plate portion 125a. The bent portion 125b may be bent at about 90 degrees from the plate portion 125a and may be formed to face (e.g., to extend) downwardly. Accordingly, the bent portion 125b may be disposed in a direction parallel to the electrode connection portion 121, that is, along a longitudinal direction of the electrode uncoated portions 111 and 112 of the electrode assembly 110. Accordingly, the bent portion 125b may be coupled, through welding, in a state of being in contact with the electrode connection portion 121. In other words, the bent portion 125b may be in direct contact with the electrode uncoated portion 111 (112) and may be welded to the electrode connection portion 121.

The coupling protrusion 125c may be formed at a lower portion of the plate portion 125a facing the electrode assembly 110 along the circumference (e.g., the periphery) of a terminal hole (e.g., an opening) formed in (or through) the plate portion 125a. In other words, the coupling protrusion 125c may protrude from the current collector plate, e.g. from the plate portion 125a, toward the electrode assembly along the edge of the terminal hole. The coupling protrusion 125c allows electrically connecting, e.g. by welding, the electrode terminal with the current collector plate a welding beam without damage of other components of the secondary battery. A thickness of the coupling protrusion 125c may be a distance the coupling protrusion 125c protrudes from the plate portion 125a.

Therefore, when the first electrode terminal 164 is welded in a subsequent process, the upper insulating member 170 and the gasket 166 may not be damaged by the welding beam w (see, e.g., FIG. 3) because the welding beam w does not reach the upper portion of the plate portion 125a. As a result, the insulating member 170 and/or the gasket 166 do not undergo dielectric breakdown, and thus, electrical separation between the cap plate 161 and the plate portion 125a can be maintained.

The height h, at which the coupling protrusion 125c protrudes, may be in a range of about 0.2*t1 ≤ h ≤t1, compared to the thickness t1 of the plate portion 125a. When the height h of the coupling protrusion 125c is greater than or equal to about 0.2*t1, the welding beam w may not reach the insulating member 170, and when the height h of the coupling protrusion 125c is less than or equal to about t1, the total terminal coupling portion 125 may be reduced, thereby securing (or providing) further space for the electrode assembly 110 in the case 150.

In addition, the width t2 of the coupling protrusion 125c may also be in a range of about 0.2*t1≤t2≤t1, compared to the thickness t1 of the plate portion 125a. When the width t2 of the coupling protrusion 125c is greater than or equal to about 0.2*t1, the width thereof may be greater than the width of the welding beam w, and thus, the welding beam w may not deviate from the coupling protrusion 125c in the horizontal direction. In addition, when the width t2 of the coupling protrusion 125c is less than or equal to about the thickness t1, the plate portion 125a may be easily manufactured by performing punch processing, and the weight of the terminal coupling portion 125 can be reduced.

The center of the welding beam w in the horizontal direction may be located (or positioned) inside the coupling protrusion 125c. Accordingly, the welding beam w is irradiated around the inside of the coupling protrusion 125c rather than at the boundary between the coupling protrusion 125c and the first electrode terminal 164, thus, the welding beam w does not reach the insulating member 170 and/or the gasket 166 along the boundary.

A rivet groove 125d, to which the first electrode terminal 164 is rivet-coupled, may be formed at an inner lower portion of the coupling protrusion 125c. The rivet groove 125d may be formed along the circumference of the inner hole of the coupling protrusion 125c and may be a ring-shaped groove. In other words, the rivet groove 125d may be formed along the inner surface of the coupling protrusion 125c that faces the electrode terminal. The rivet groove 125d may have a width in a range of about 0.1 mm to about 0.2 mm in the horizontal direction and a height in a range of about 0.2 mm to about 0.4 mm in the vertical direction. The aforesaid width in horizontal direction may be understood as the depth of the rivet groove with which it reaches into the coupling protrusion 125c. When the width of the rivet groove 125d is greater than or equal to about 0.1 mm, preferably greater than or equal to about 0.12 mm, preferably greater than or equal to about 0.14 mm, the first electrode terminal 164 is securely fastened, and when the width of the rivet groove 125d is less than or equal to about 0.2 mm, preferably less than or equal to about 0.18 mm, preferably less than or equal to about 0.16 mm, the end of the first electrode terminal 164 is positioned in a central region of the welding beam w in the horizontal direction, and thus, stable welding can be performed. When the height of the rivet groove 125d is greater than or equal to about 0.2 mm, the first electrode terminal 164 may not be detached from the rivet groove 125d after welding, and when the height of the rivet groove 125d is less than or equal to about 0.4 mm, the terminal of the first electrode terminal 164 may be located inside the welding beam w in the vertical direction, thereby determining (e.g., controlling) the depth of the welding beam w. Preferably, the height of the rivet groove 125d is greater than or equal to about 0.3 mm. Preferably, the height of the rivet groove 125d is less than or equal to about 0.35 mm.

The second current collector plate 130 is made of a conductive material, such as nickel, and is in contact with the second electrode uncoated portion 112 protruding from the other end of the electrode assembly 110 to be electrically connected to the second electrode plate. The second current collector plate 130 includes an electrode connection portion 131 and a terminal connection portion 135. However, because the shape of the second current collector plate 130 is the same (or substantially the same) as that of the first current collector plate 120, a repeated description thereof will be omitted.

The case 150 is made of a conductive metal, such as aluminum, an aluminum alloy, or nickel-plated steel, and has a substantially hexahedral shape in which an opening through which the electrode assembly 110 can be inserted and seated is formed. The cap plate 161 is coupled to the opening (e.g., along a periphery of the opening) in the case 150 to seal the case 150. The inner surface of the case 150 is insulated to prevent an electrical short circuit from occurring therein. In some embodiments, one electrode of the electrode assembly 110 may be electrically connected to the case 150 through the cap plate 161. Even in such an embodiment, an electrical short circuit inside the case 150 is prevented by the insulation treatment. The case 150 may act as a first electrode, for example, a positive electrode.

The cap assembly 160 is coupled to an upper portion of (e.g., the opening in) the case 150. For example, the cap assembly 160 includes a cap plate 161, an electrolyte injection hole (e.g., an electrolyte injection opening) 162, a safety vent 163, a first electrode terminal 164, a second electrode terminal 165, a gasket 166, a first electrode terminal plate 167, a second electrode terminal plate 168, a fastening plate 169, and an insulating member 170.

The cap plate 161 seals the opening in the case 150 and may be formed of the same material as the case 150. For example, the cap plate 161 may be coupled to the case 150 by laser welding. In addition, the cap plate 161 may be electrically independent or, in some embodiments, may be electrically connected to either the first current collector plate 120 or the second current collector plate 130. The cap plate 161 may have a protrusion (e.g., a groove) 161a protruding downwardly at a terminal periphery to fix the position of the insulating member 170 coupled thereto.

The electrolyte injection hole 162 for injecting an electrolyte is formed in the cap plate 161. The electrolyte is injected into the inside of the case 150 through the electrolyte injection hole 162, and thereafter, the electrolyte injection hole 162 is sealed by a stopper.

The safety vent 163 is formed to have a relatively thin thickness compared to other regions of the cap plate 161 and is formed at approximately the center of the cap plate 161. When the internal pressure of the case 150 is higher than a set breaking (or rupture) pressure, the safety vent 163 ruptures to prevent the secondary battery 100 from exploding.

The first electrode terminal 164 and the second electrode terminal 165 are respectively formed (or installed) to pass through the cap plate 161. The first electrode terminal 164 is coupled to a terminal hole (e.g., a terminal opening) formed in the terminal connection portion 125 of the first current collector plate 120 to be electrically connected to the first current collector plate 120. Similarly, the second electrode terminal 165 is coupled to a terminal hole (e.g., a terminal opening) formed in the terminal connection portion 135 of the second current collector plate 120 to be electrically connected to the second current collector plate 130.

The first electrode terminal 164 may include a terminal body 164a, a flange portion 164d, a lower riveting portion 164b, and an upper riveting portion 164e.

The terminal body 164a may have a substantially cylindrical shape. The terminal body 164a may be coupled to the upper portion of the cap plate 161 through the flange portion 164d and a fastening plate 169 may be formed therebetween to achieve electrical separation.

The lower riveting portion 164b may be formed under the terminal body 164a. The lower riveting portion 164b may be deformed through a riveting process, and thus, an end portion 164c thereof may be coupled into the rivet groove 125d. In addition, when the end portion 164c of the lower riveting portion 164b is coupled to fill the inside along the shape of the rivet groove 125d, the welding beam w may be applied. Through this process, the end portion 164c of the lower riveting portion 164b may be electrically and physically coupled to the terminal coupling portion 125 of the current collector plate 120.

The upper riveting portion 164e may be deformed through riveting on the upper surface of the first terminal plate 167 to be coupled to the first terminal plate 167. Accordingly, the first electrode terminal 164 is electrically connected to the first uncoated portion 111 of the electrode assembly 110 through the current collector plate 120 and is connected to the first terminal plate 167 disposed outside, thereby forming a current path.

The second electrode terminal 165 may have the same shape as the first electrode terminal 164, and, for convenience, a detailed description of the second electrode terminal 165 will be omitted.

The gasket 166 is formed (or installed) between the first and second electrode terminals 164 and 165 and the cap plate 161. The gasket 166 surrounds (e.g., extends around a periphery of) the outside of each of the first and second terminals 164 and 165 and is made of an insulating material. The gasket 166 seals portions between the first and second electrode terminals 164 and 165 and the cap plate. The gasket 166 prevents external moisture from penetrating into the secondary battery 100 and/or prevents the electrolyte contained in the secondary battery 100 from leaking to the outside.

The first terminal plate 167 is coupled to the first electrode terminal 164 protruding above the cap plate 161. After the first terminal plate 167 is coupled to the first electrode terminal 164, an upper portion of the first electrode terminal 164 may be riveted or a boundary surface between the first terminal plate 167 and the first electrode terminal 164 may be welded. Thus, the first terminal plate 167 may be fixed to the first electrode terminal 164.

The second electrode terminal plate 168 is coupled to the second electrode terminal 165 protruding to an upper portion of (e.g., protruding above an upper surface of) the cap plate 161. After the second electrode terminal plate 168 is coupled to the second electrode terminal 165, the upper portion of the second electrode terminal 165 may be riveted or the boundary surface between the second electrode terminal plate 168 and the second electrode terminal 165 may be welded. Thus, the second electrode terminal plate 168 may be fixed to the second electrode terminal 165.

The fastening plate 169 is formed (or installed) between the cap plate 161 and the first terminal plate 167 and between the cap plate 161 and the second electrode terminal plate 168. The fastening plate 169 may be formed of either an electrically conductive material or an insulating material. For example, in an embodiment in which the first electrode terminal 164 has the same polarity as the cap plate 161, the fastening plate 169 positioned under the first terminal plate 167 may be made of a conductive material and the fastening plate 169 positioned under the second electrode terminal plate 168 may be made of an insulating material. When the fastening plate 169 is made of an insulating material, the first electrode terminal 164 and the second electrode terminal 165 may be electrically separated from the cap plate 161.

The insulating member 170 is formed between the first current collector plate 120 and the cap plate 161 and between the second current collector plate 130 and the cap plate 161 such that the first and second current collector plates 120 and 130 and the cap plate 161 are electrically insulated from each other. As described above, when the current collector plates 120 and 130 and the electrode terminals 164 and 165 are welded, respectively, the welding beam w does not reach the insulating member 170 and/or the gasket 166, and thus, the insulating member 170 and/or the gasket 166 may not be damaged.

As described above, in the secondary battery according to embodiments of the present disclosure, with respect to the terminal coupling portion 125 of the current collector plates 120 and 130, the coupling protrusion 125c protruding downwardly toward the electrode assembly 110 is provided in the periphery of a terminal hole through which the electrode terminals 164 and 165 pass, and welding is performed when the electrode terminals 164 and 165 are coupled along the rivet groove 125d formed inside the coupling protrusion 125c. Thus, the welding beam w may not reach the insulating member 170 and/or the gasket 166 located above the current collector plates 120 and 130, thereby preventing the insulating member 170 and/or the gasket 166 from being damaged.

Regarding the method of manufacturing the secondary battery as described above.

The method comprises providing a case 150 having an accommodating space therein, with an electrode assembly 110 accommodated in the case 150 and having an uncoated portion on 111 one end thereof, with a current collector plate 120 electrically connected to the uncoated portion 111 of the electrode assembly 110, with a cap plate 161 sealing the case 150, and with an electrode terminal 164 (extending) outside the cap plate 161, wherein the current collector plate 120 has a terminal hole through which the electrode terminal 164 passes and the current collector plate 120 includes a coupling protrusion 125c protruding from the current collector plate 120 toward the electrode assembly 110 along a periphery of the terminal hole. The method further comprises electrically connecting the electrode terminal 164 with the current collector plate 120.

In one embodiment of the method, the electrode terminal 164 may be directly (electrically) connected with the coupling protrusion 125c in order to electrically connecting the electrode terminal 164 with the current collector plate 120.

In the method, the electrically connecting of the electrode terminal 164 with the current collector plate 120 may be performed by welding. Preferably, the electrically connecting of the electrode terminal 164 with the current collector plate 120 may be performed by welding the electrode terminal 164 to the coupling protrusion 125c. Preferably, the welding may be performed upwardly from a lower surface of the coupling protrusion 125c.

The method may further comprise before the welding, positioning a center of a welding beam inside the coupling protrusion 125c.

The method may further comprise, before the welding, deforming a lower riveting portion 164b of the electrode terminal 164 as to couple an end portion 164c of the lower riveting portion 164 b with the coupling protrusion 125c inside the rivet groove 125d. The deforming may be performed in a riveting-process, wherein the electrode terminal corresponds to a rivet.

According to embodiments of the present disclosure, the current collector plate includes a coupling protrusion protruding downwardly, and welding is performed when an electrode terminal is coupled along a rivet groove formed inside the coupling protrusion so that welding beam(s) may not reach an insulating member and/or a gasket located above the current collector plate, thereby preventing the insulating member and/or the gasket from being damaged.

The foregoing embodiments are only examples for carrying out the secondary battery according to the present disclosure, which is not limited to the embodiments. Accordingly, it will be understood by a person skilled in the art that various changes in form and details may be made therein without departing from the scope of the present disclosure as defined by the following claims.

## Claims

1. A secondary battery (100) comprising:
a case (150) having an accommodating space therein;
an electrode assembly (110) accommodated in the case (150) and having an uncoated portion (111, 112) on one end thereof;
a current collector plate (120, 130) electrically connected to the uncoated portion (111, 112) of the electrode assembly (110);
a cap plate (161) sealing the case (150); and
an electrode terminal (164, 165) outside the cap plate (161) and electrically connected to the current collector plate (120, 130),
wherein the current collector plate (120, 130) has a terminal hole through which the electrode terminal (164, 165) passes and includes a coupling protrusion (125c) protruding from the current collector plate toward the electrode assembly (110) along a periphery of the terminal hole, the electrode terminal (164, 165) is electrically connected to the current collector plate (120, 130) via the coupling protrusion (125c), and the electrode terminal (164, 165) is welded to the coupling protrusion (125c).

2. The secondary battery (100) of claim 1, wherein a rivet groove (125d) is formed inside the coupling protrusion (125c).

3. The secondary battery (100) of claim 2, wherein the rivet groove (125d) in the coupling protrusion has a width in a range of 0.1 mm to 0.2 mm in a direction parallel to a longitudinal direction of the electrode assembly (110).

4. The secondary battery (100) of claims 2 or 3, wherein the rivet groove (125d) in the coupling protrusion (125c) has a height in a range of 0.2 mm to 0.4 mm in a direction perpendicular to a longitudinal direction of the electrode assembly (110).

5. The secondary battery (100) of one of the preceding claims, wherein the current collector plate (120, 130) comprises a terminal connection portion (125, 135) and an electrode connection portion (121, 131),
wherein the terminal connection portion (125) comprises a plate portion (125a) extending in a direction parallel to the electrode assembly (110), and
wherein the coupling protrusion (125c) is formed on a lower surface of the plate portion (125a).

6. The secondary battery (100) of claim 5, wherein a height (h) at which the coupling protrusion protrudes from the lower surface of the plate portion (125a) is in a range of 0.2*t1≤ h ≤ t1, wherein t1 is a thickness of the plate portion (125a).

7. The secondary battery (100) of claims 5 or 6, wherein a width (t2) of the coupling protrusion along the lower surface of the plate portion (125a) is in a range of 0.2*t1 ≤ t2 ≤ t1, wherein t1 is a thickness of the plate portion (125a).

8. A method of manufacturing the secondary battery of one of the proceeding claims, the method comprises:
providing a case (150) having an accommodating space therein,
with an electrode assembly (110) accommodated in the case (150) and having an uncoated portion (111, 112) on one end thereof,
with a current collector plate (120, 130) electrically connected to the uncoated portion (111, 112) of the electrode assembly (110),
with a cap plate (161) sealing the case (150), and
with an electrode terminal (164, 165) outside the cap plate (161), wherein the current collector plate (120, 130) has a terminal hole through which the electrode terminal (164, 165) passes and includes a coupling protrusion (125c) protruding from the current collector plate toward the electrode assembly (110) along a periphery of the terminal hole; and
electrically connecting the electrode terminal (164, 165) with the current collector plate (120, 130), by electrically connecting the electrode terminal (164, 165) with the coupling protrusion (125c),
wherein the electrically connecting of the electrode terminal (164, 165) with the current collector plate (120, 130) is performed by welding the electrode terminal (164, 165) to the coupling protrusion (125c), preferably upwardly from a lower surface of the coupling protrusion.

## Patentansprüche

1. Sekundärbatterie (100), umfassend:
ein Gehäuse (150) mit einem darin befindlichen Aufnahmeraum;
eine Elektrodenanordnung (110), die in dem Gehäuse (150) aufgenommen ist und an einem Ende davon einen unbeschichteten Abschnitt (111, 112) aufweist;
eine Stromkollektorplatte (120, 130), die elektrisch mit dem unbeschichteten Abschnitt (111, 112) der Elektrodenanordnung (110) verbunden ist;
eine Deckelplatte (161), die das Gehäuse (150) abdichtet; und
einen Elektrodenanschluss (164, 165) außerhalb der Deckelplatte (161), der elektrisch mit der Stromkollektorplatte (120, 130) verbunden ist,
wobei die Stromkollektorplatte (120, 130) ein Anschlussloch aufweist, durch das der Elektrodenanschluss (164, 165) hindurchtritt, und einen Kopplungsvorsprung (125c) umfasst, der von der Stromkollektorplatte entlang eines Umfangs des Anschlusslochs in Richtung auf die Elektrodenanordnung (110) vorsteht, der Elektrodenanschluss (164, 165) über den Kopplungsvorsprung (125c) elektrisch mit der Stromkollektorplatte (120, 130) verbunden ist und der Elektrodenanschluss (164, 165) mit dem Kopplungsvorsprung (125c) verschweißt ist.

2. Sekundärbatterie (100) nach Anspruch 1, wobei innerhalb des Kopplungsvorsprungs (125c) eine Nietnut (125d) ausgebildet ist.

3. Sekundärbatterie (100) nach Anspruch 2, wobei die Nietnut (125d) in dem Kopplungsvorsprung eine Breite in einem Bereich von 0,1 mm bis 0,2 mm in einer Richtung parallel zu einer Längsrichtung der Elektrodenanordnung (110) aufweist.

4. Sekundärbatterie (100) nach Anspruch 2 oder 3, wobei die Nietnut (125d) in dem Kopplungsvorsprung (125c) eine Höhe in einem Bereich von 0,2 mm bis 0,4 mm in einer Richtung senkrecht zu einer Längsrichtung der Elektrodenanordnung (110) aufweist.

5. Sekundärbatterie (100) nach einem der vorhergehenden Ansprüche, wobei die Stromkollektorplatte (120, 130) einen Anschlussverbindungsabschnitt (125, 135) und einen Elektrodenverbindungsabschnitt (121, 131) umfasst,
wobei der Anschlussverbindungsabschnitt (125) einen Plattenabschnitt (125a) umfasst, der sich in einer Richtung parallel zu der Elektrodenanordnung (110) erstreckt, und
wobei der Kopplungsvorsprung (125c) auf einer unteren Oberfläche des Plattenabschnitts (125a) ausgebildet ist.

6. Sekundärbatterie (100) nach Anspruch 5, wobei eine Höhe (h), mit der der Kopplungsvorsprung von der unteren Oberfläche des Plattenabschnitts (125a) vorsteht, in einem Bereich von 0,2*t1 ≤ h ≤ t1 liegt, wobei t1 eine Dicke des Plattenabschnitts (125a) ist.

7. Sekundärbatterie (100) nach Anspruch 5 oder 6, wobei eine Breite (t2) des Kopplungsvorsprungs entlang der unteren Oberfläche des Plattenabschnitts (125a) in einem Bereich von 0,2*t1 ≤ t2 ≤ t1 liegt, wobei t1 eine Dicke des Plattenabschnitts (125a) ist.

8. Verfahren zur Herstellung der Sekundärbatterie nach einem der vorhergehenden Ansprüche, wobei das Verfahren umfasst:
Bereitstellen eines Gehäuses (150) mit einem darin befindlichen Aufnahmeraum,
mit einer Elektrodenanordnung (110), die in dem Gehäuse (150) aufgenommen ist und an einem Ende davon einen unbeschichteten Abschnitt (111, 112) aufweist,
mit einer Stromkollektorplatte (120, 130), die elektrisch mit dem unbeschichteten Abschnitt (111, 112) der Elektrodenanordnung (110) verbunden ist,
mit einer Deckelplatte (161), die das Gehäuse (150) abdichtet, und
mit einem Elektrodenanschluss (164, 165) außerhalb der Deckelplatte (161), wobei die Stromkollektorplatte (120, 130) ein Anschlussloch aufweist, durch das der Elektrodenanschluss (164, 165) hindurchtritt, und einen Kopplungsvorsprung (125c) umfasst, der von der Stromkollektorplatte entlang eines Umfangs des Anschlusslochs in Richtung auf die Elektrodenanordnung (110) vorsteht; und
elektrisches Verbinden des Elektrodenanschlusses (164, 165) mit der Stromkollektorplatte (120, 130) durch elektrische Verbindung des Elektrodenanschlusses (164, 165) mit dem Kopplungsvorsprung (125c),
wobei das elektrische Verbinden des Elektrodenanschlusses (164, 165) mit der Stromkollektorplatte (120, 130) durch Verschweißen des Elektrodenanschlusses (164, 165) mit dem Kopplungsvorsprung (125c) erfolgt, vorzugsweise von einer unteren Oberfläche des Kopplungsvorsprungs nach oben.

## Revendications

1. Batterie secondaire (100) comportant :
un boîtier (150) ayant un espace de réception en son sein ;
un ensemble d'électrodes (110) reçu dans le boîtier (150) et ayant une partie non revêtue (111, 112) sur une extrémité de celui-ci ;
une plaque de collecteur de courant (120, 130) électriquement connectée à la partie non revêtue (111, 112) de l'ensemble d'électrodes (110) ;
une plaque de recouvrement (161) scellant le boîtier (150) ; et
une borne d'électrode (164, 165) à l'extérieur de la plaque de recouvrement (161) et électriquement connectée à la plaque de collecteur de courant (120, 130),
dans laquelle la plaque de collecteur de courant (120, 130) possède un trou de borne à travers lequel passe la borne d'électrode (164, 165) et comprend une saillie de couplage (125c) faisant saillie à partir de la plaque de collecteur de courant vers l'ensemble d'électrodes (110) le long d'une périphérie du trou de borne, la borne d'électrode (164, 165) est électriquement connectée à la plaque de collecteur de courant (120, 130) par l'intermédiaire de la saillie de couplage (125c), et la borne d'électrode (164, 165) est soudée à la saillie de couplage (125c).

2. Batterie secondaire (100) selon la revendication 1, dans laquelle une rainure de rivet (125d) est formée à l'intérieur de la saillie de couplage (125c).

3. Batterie secondaire (100) selon la revendication 2, dans laquelle la rainure de rivet (125d) dans la saillie de couplage possède une largeur dans une plage de 0,1 mm à 0,2 mm dans une direction parallèle à une direction longitudinale de l'ensemble d'électrodes (110).

4. Batterie secondaire (100) selon les revendications 2 ou 3, dans laquelle la rainure de rivet (125d) dans la saillie de couplage (125c) possède une hauteur dans une plage de 0,2 mm à 0,4 mm dans une direction perpendiculaire à une direction longitudinale de l'ensemble d'électrodes (110).

5. Batterie secondaire (100) selon l'une des revendications précédentes, dans laquelle la plaque de collecteur de courant (120, 130) comporte une partie de connexion de borne (125, 135) et une partie de connexion d'électrode (121, 131),
dans laquelle la partie de connexion de borne (125) comporte une partie de plaque (125a) s'étendant dans une direction parallèle à l'ensemble d'électrodes (110), et
dans laquelle la saillie de couplage (125c) est formée sur une surface inférieure de la partie de plaque (125a).

6. Batterie secondaire (100) selon la revendication 5, dans laquelle une hauteur (h) à laquelle la saillie de couplage fait saillie à partir de la surface inférieure de la partie de plaque (125a) est dans une plage de 0,2*t1 ≤ h ≤ t1, dans laquelle t1 est une épaisseur de la partie de plaque (125a).

7. Batterie secondaire (100) selon les revendications 5 ou 6, dans laquelle une largeur (t2) de la saillie de couplage le long de la surface inférieure de la partie de plaque (125a) est dans une plage de 0,2*t1 ≤ t2 ≤ t1, dans laquelle t1 est une épaisseur de la partie de plaque (125a).

8. Procédé de fabrication de la batterie secondaire selon l'une des revendications précédentes, le procédé comporte :
la fourniture d'un boîtier (150) ayant un espace de réception en son sein ;
avec un ensemble d'électrodes (110) reçu dans le boîtier (150) et ayant une partie non revêtue (111, 112) sur une extrémité de celui-ci,
avec une plaque de collecteur de courant (120, 130) électriquement connectée à la partie non revêtue (111, 112) de l'ensemble d'électrodes (110),
avec une plaque de recouvrement (161) scellant le boîtier (150), et
avec une borne d'électrode (164, 165) à l'extérieur de la plaque de recouvrement (161), dans lequel la plaque de collecteur de courant (120, 130) possède un trou de borne à travers lequel passe la borne d'électrode (164, 165) et comprend une saillie de couplage (125c) faisant saillie à partir de la plaque de collecteur de courant vers l'ensemble d'électrodes (110) le long d'une périphérie du trou de borne ; et
la connexion électrique de la borne d'électrode (164, 165) à la plaque de collecteur de courant (120, 130), par la connexion électrique de la borne d'électrode (164, 165) à la saillie de couplage (125c),
dans lequel la connexion électrique de la borne d'électrode (164, 165) à la plaque de collecteur de courant (120, 130) est réalisée par le soudage de la borne d'électrode (164, 165) à la saillie de couplage (125c), de préférence vers le haut à partir d'une surface inférieure de la saillie de couplage.
